Europäisches Patentamt

European Patent Office

Office européen des brevets

(19)

(11) Veröffentlichungsnummer : **0 344 665 B1**

# (12) EUROPÄISCHE PATENTSCHRIFT

(45) Veröffentlichungstag der Patentschrift :
29.04.92 Patentblatt 92/18

(51) Int. Cl.⁵ : **A23P 1/08,** A23L 1/18,
B01J 8/14

(21) Anmeldenummer : **89109599.4**

(22) Anmeldetag : **27.05.89**

(54) **Verfahren zum Aufbringen von Stoffen auf expandierte stärkehaltige Produkte.**

(30) Priorität : **02.06.88 DD 316347**

(43) Veröffentlichungstag der Anmeldung :
**06.12.89 Patentblatt 89/49**

(45) Bekanntmachung des Hinweises auf die
Patenterteilung :
**29.04.92 Patentblatt 92/18**

(84) Benannte Vertragsstaaten :
**AT CH DE ES FR GB IT LI SE**

(56) Entgegenhaltungen :
**EP-A- 0 172 530
US-A- 3 251 337
US-A- 3 437 073
US-A- 3 518 967
US-A- 4 532 155**

(73) Patentinhaber :
**TROCKNUNGS-ANLAGEN-GESELLSCHAFT
MBH
Am Alten Bahnhof 5
W-3300 Braunschweig (DE)
Patentinhaber : SKET Schwermaschinenbau
Magdeburg GmbH
Marienstrasse 20, Postfach 77
O-3011 Magdeburg (DE)**

(72) Erfinder : **Mörl, Lothar, Prof.Dr.sc.techn.
Schillerstrasse 46
O-3080 Magdeburg (DE)**
Erfinder : **Künne, Hans-Joachim, Dr.sc.techn.
Lion-Feuchtwanger-Strasse 2
O-3090 Magdeburg (DE)**
Erfinder : **Krell, Lothar, Dr.-Ing.
Otto-Baer-Strasse 53
O-3033 Magdeburg (DE)**
Erfinder : **Strümke, Manfred, Prof.Dr.-Ing.
Willi-Bredel-Strasse 1
O-3090 Magdeburg (DE)**
Erfinder : **Schmidt, Jörg, Dipl.-Ing.
Uhlandstrasse 20
O-3080 Magdeburg (DE)**
Erfinder : **Schuart, Lothar, Prof.Dr.sc.techn.
Schrotebogen 12
O-3034 Magdeburg (DE)**

(74) Vertreter : **Döring, Rudolf, Dr.-Ing.
Patentanwälte Dr.-Ing. R. Döring Dipl.-Phys.
Dr. J. Fricke Jasperallee 1a
W-3300 Braunschweig (DE)**

## Beschreibung

Die Erfindung betrifft ein Verfahren zum Aufbringen von Stoffen auf expandierte stärkehaltige Produkte.

Um expandierte stärkehaltige Produkte zu einem schmackhaften Nahrungsmittel zu veredeln, ist es oft notwendig, nach dem Expandieren Aromastoffe auf diese stärkehaltigen Produkte aufzubringen.

Auf in heißem Öl expandierte stärkehaltige Produkte werden Aromastoffe und Gewürze aufgebracht, indem diese Produkte auf eine Unterlage, vorzugsweise ein Transportband, gelegt werden und die aufzubringenden Stoffe darübergestreut werden.

Es ist bekannt, Popcorn mit geschmolzenem Fett zu beträufeln und anschließend die Aromastoffe aufzustreuen oder durch Wälzen des Popcorns in den Aromastoffen auf das Produkt aufzubringen. Diese Verfahren haben den Nachteil, daß die Partikel des Produktes nicht gleichmäßig mit dem Aromastoff überzogen werden. Außerdem ist die Ausnutzung der Aromastoffe ungenügend.

Das Produkt ist wegen des Fettanteiles ernährungsphysiologisch ungünstig und nur beschränkt haltbar.

In der Patentschrift CH 604 923 wird ein "Verfahren zum Überziehen von wasserlöslichen oder in Wasser dispergierbaren Teilchen mit einer Beschichtungsflüssigkeit, Erzeugnisse und Anwendung des Verfahrens" beschrieben. Es wird vorgeschlagen, unter Nutzung der Wirbelschichttechnik eine wässerige Lösung oder Suspension des Überzugsmaterials auf Teilchen < 1 mm aufzusprühen. In dem hier vorliegenden Fall handelt es sich jedoch um Teilchen, deren Korngröße weit über 1 mm liegt und die zudem oft eine sehr von der Kugelform abweichende Gestalt haben. Es kommt zur Ausbildung inhomogener Wirbelschichten, bei denen das Gas-Dampf-Gemisch den Feststoff als Pfropfen oder in Blasenform durchströmt oder Gassen bildet. Aus diesem Grund ist dieses Verfahren für expandierte stärkehaltige Produkte nicht anwendbar.

Der Erfindung liegt daher die Aufgabe zugrunde, ein Verfahren zum Aufbringen von Stoffen auf expandierte stärkehaltige Produkte vorzuschlagen, mit dem eine gleichmäßigere Verteilung der aufzubringenden Stoffe auf der Oberfläche des expandierten stärkehaltigen Produktes bei gleichzeitiger guter Ausnutzung dieser Stoffe erzielt wird.

Diese Aufgabe wird erfindungsgemäß dadurch gelöst, daß das expandierte stärkehaltige Produkt unmittelbar nach der Expansion einem Reaktionsraum aufgegeben wird, daß es dort dem Erdschwere- oder einem Zentrifugalkraftfeld oder beiden zusammen ausgesetzt wird, daß dabei ein Gas-Dampf-Gemisch mit einer Temperatur zwischen 10°C und 165°C mit einem Winkel zwischen 45° und 120° zur Wirkungsrichtung des Kraftfeldes in den Reaktionsraum einströmt, daß dieses Gas-Dampf-Gemisch eine Einströmgeschwindigkeit hat, die dem Zwei- bis Zehnfachen der Schwebegeschwindigkeit des expandierten stärkehaltigen Produktes entspricht, daß zusammen mit dem Gas- Dampf-Gemisch die auf die Oberfläche des expandierten stärkehaltigen Produktes aufzubringenden Stoffe in den Reaktionsraum eingebracht werden, daß dem Gas-Dampf-Gemisch im Expansionsraum eine Geschwindigkeitskomponente aufgeprägt wird, die der Richtung des Kraftfeldes entgegensteht und kurz vor dem Abzug des Gas-Dampf-Gemisches etwa der halben Schwebegeschwindigkeit des expandierten stärkehaltigen Produktes entspricht.

Dieses Verfahren kann insbesondere bei der Herstellung der als Snacks bekannten stärkehaltigen Produkte dem Aufbringen von Würzstoffen, Aromastoffen oder anderen Stoffen dienen.

Beispielsweise können Kartoffelchips mit Paprikaaroma gewürzt werden, um einen herzhafteren Geschmack zu erzielen.

Das vorgeschlagene Verfahren bewirkt nicht nur eine hohe Qualität der erzeugten Produkte, sondern gleichzeitig eine gute Ausnutzung der aufzubringenden Stoffe. Zur Schwebegeschwindigkeit vgl. H. Schubert "Aufbereitung fester mineralischer Rohstoffe", Bd.1 S.242, VEB Deutscher Verlag für Grundstoffindustrie, Leipzig, 1975.

Am einfachsten kann als Kraftfeld bei dem Verfahren das Erdschwerefeld verwendet werden. Dann hat das Gas-Dampf-Gemisch eine Einströmgeschwindigkeit von 17 m/s bis 34 m/s. Die dem Gas-Dampf-Gemisch im Reaktionsraum aufgeprägte Geschwindigkeitskomponente, die der Richtung des Kraftfeldes entgegensteht, weist einen Betrag von 0,8 bis 5,0 m/s auf. Die Verweilzeit liegt zwischen 12 und 75 Sekunden.

Als Kraftfeld kann auch ein Zentrifugalkraftfeld eingesetzt werden. Die in diesem Fall notwendigen Geschwindigkeiten sind von der Stärke des Zentrifugalkraftfeldes und von den Eigenschaften des expandierten stärkehaltigen Produktes abhängig. Das Zentrifugalkraftfeld kann durch eine zirkulierende Strömung des Gas-Dampf-Gemisches oder durch die Verwendung einer rotierenden Trommel als Expansionsraum erzeugt werden. Durch den Einsatz eines Zentrifugalkraftfeldes wird es möglich ein stärkeres Kraftfeld als das Erdschwerefeld zu nutzen. Dadurch kann der Prozeß wesentlich intensiviert werden. Ein weiterer Vorteil des Zentrifugalkraftfeldes ist, daß es in weiten Grenzen verändert werden kann. Dadurch ergibt sich eine zusätzliche Möglichkeit, den Prozeß zu beeinflussen.

Zusätzlich zu den mit dem Gas-Dampf-Gemisch eingebrachten Stoffen können weitere Stoffe aufgegeben werden, die auf die Oberfläche des expandierten stärkehaltigen Produktes aufzubringen sind.

Im folgenden soll die Funktion der Erfindung erläutert werden. Nach der Aufgabe des expandierten stärkehaltigen Produktes wird dieses durch die Wirkung des Kraftfeldes in den Wirkungsbereich des Gas-Dampf-Gemisches bewegt. Durch die hohe Geschwindigkeit des Gas-Dampf-Gemisches erfolgt sofort und unabhängig von der Form der Partikel eine Fluidisierung des Feststoffes. In diesem Bereich des intensivsten Kontaktes zwischen dem Gas-Dampf-Gemisch und dem Feststoff werden die gewünschten Stoffe auf die expandierten stärkehaltigen Produkte aufgetragen. Vorhandene Lösungsmittel, z.B. Wasser, werden verdampft und die Produkte gekühlt.

Das expandierte stärkehaltige Produkt besitzt, wenn es aus dem Apparat zur Expansion ausgetragen wird, eine stark aktivierte Oberfläche. Durch das Aufbringen von Stoffen auf diese Oberfläche nutzt man den durch die Expansion entstandenen aktivierten Zustand der Oberfläche effektiv aus. Die auf das expandierte stärkehaltige Produkt aufzubringenden Stoffe werden vollständig genutzt, weil sie zu einem Zeitpunkt in Kontakt mit dem expandierten stärkehaltigen Produkt kommen, wenn dieses eine stark aktivierte Oberfläche aufweist. Außerdem werden diese Stoffe an der Stelle des intensivsten Kontaktes mit dem Gas-Dampf-Gemisch aufgegeben, wodurch auch der Kontakt zwischen den aufzubringenden Stoffen und den expandierten stärkehaltigen Produkten sehr intensiv ist.

Indem dem Gas-Dampf-Gemisch eine Geschwindigkeitskomponente aufgeprägt wird, die dem Kraftfeld entgegengerichtet ist und einen Betrag kleiner als die halbe Schwebegeschwindigkeit hat, wird der Abzug des Gas-Dampf-Gemisches möglich, ohne das stärkehaltige Produkt gleichzeitig auszutragen. Die dem Kraftfeld entgegengerichtete Geschwindigkeitskomponente kann dem Gas-Dampf-Gemisch aufgeprägt werden, indem dieses an einer Wand umgelenkt wird oder auch indem es durch nachströmendes Gas-Dampf-Gemisch verdrängt wird. Es wird eine zirkulierende Bewegung des expandierten stärkehaltigen Produktes innerhalb des Apparates erzeugt. Dadurch kommt jedes Partikel des expandierten stärkehaltigen Produktes oft in die Zone intensivsten Gas-Dampf-Feststoff-Kontaktes.

Da das erfindungsgemäße Verfahren Stoffe auf expandierte stärkehaltige Produkte ohne Fettzugabe aufbringt, wird bei stärkehaltigen Produkten beliebiger Form, die ohne Öl expandiert wurden, als zusätzlicher Vorteil erreicht, daß diesen ihr ernährungsphysiologischer Wert und ihre Haltbarkeit erhalten bleiben, die bisher durch die Zugabe von Fett stark beeinträchtigt wurden.

Als expandierte stärkehaltige Produkte kommt eine Vielzahl von Produkten in Frage, beispielsweise Kartoffelchips und andere speziell geformte Kartoffelteile oder auf Kartoffelbasis hergestellte Formen sowie Mais.

Im folgenden soll anhand der Zeichnung ein Ausführungsbeispiel der Erfindung im einzelnen erläutert werden.

Die Figur 1 stellt eine mögliche Realisierung des erfindungsgemäßen Verfahrens im Erdschwerefeld schematisch dar.

In der Figur 2 ist eine Variante der Realisierung des Verfahrens in einem Zentrifugalkraftfeld vertikal geschnitten dargestellt.

In der Figur 3 ist der in Zeichnung 2 dargestellte Apparat horizontal geschnitten.

Das erfindungsgemäße Verfahren zum Aufbringen von Stoffen auf expandierte stärkehaltige Produkte soll am Beispiel eines expandierten stärkehaltigen Produktes im Erdschwerefeld beschrieben werden. Das stärkehaltige Produkt besteht aus stäbchenförmigen Partikeln. Diese Partikel haben eine quadratische Grundfläche mit einer Seitenlänge von etwa 3 mm und eine Höhe von 30 mm. Das Gas-Dampf-Gemisch hat beim Einströmen eine Temperatur von 150°C. Es besteht zu 50% aus Wasserdampf. Das Gas-Dampf-Gemisch wird mit einer Geschwindigkeit von 15 m/s in den Reaktionsraum eingeleitet. Die Geschwindigkeitskomponente des Gas-Dampf-Gemisches, die entgegen dem Erdschwerefeld gerichtet ist, hat einen Absolutbetrag von 0,5 m/s. Die mittlere Verweilzeit des stärkehaltigen Produktes im Prozeß beträgt 40 Sekunden.

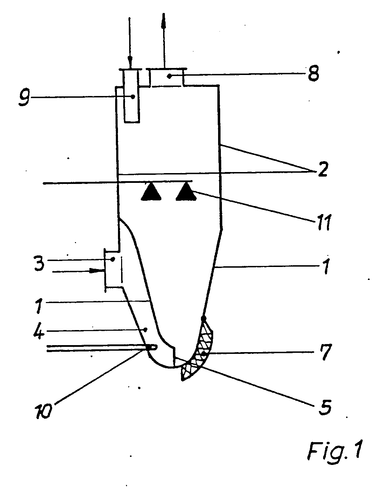

Ein möglicher Apparat zur diskontinuierlichen Realisierung des erfindungsgemäßen Verfahrens zum Aufbringen von Stoffen auf expandierte stärkehaltige Produkte im Erdschwerefeld ist in Fig. 1 schematisch dargestellt.

Er besteht im wesentlichen aus einem kanalförmigen Reaktionsraum, der in seinem unteren Teil über Wände 1 verfügt, die um etwa 80° gegen die Horizontale geneigt sind, während der obere Teil vertikale Wände 2 hat. der untere Teil des Reaktionsraumes besteht außerdem aus einem runden Boden und einer Aufgabe für das Gas-Dampf-Gemisch, die sich aus einer Zuführung für das Gas-Dampf-Gemisch 3, einer Verteilung des Gas-Dampf-Gemisches 4 und etwas vertikaler Einlaßöffnung 5 zusammensetzt. Die Einlaßöffnung 5 gewährleistet das tangentiale Einblasen des Gas-Dampf-Gemisches an der tiefsten Stelle des Apparates. Der der Einlaßöffnung 5 gegenüberliegende Teil des runden Bodens ist als Klappe 7 zum diskontinuierlichen Austrag des Gutes ausgebildet. Der obere Teil des Reaktionsraumes schließt mit einer Abdeckung ab, in der ein Gas-Dampf-Gemisch-Abzug 8 und oberhalb der Gas-Dampf-Gemisch-Aufgabe eine Gutzuführung 9 angeordnet sind. Die Breite des Apparates verhält sich zur Breite der Einlaßöffnung 5 etwa wie 10:1. Eine oder mehrere Düsen 10 zum Versprühen von Flüssigkeiten oder fließfähigen Stoffen befinden sich in der Einlaßöffnung 5.

Zusätzliche Düsen 11 können oberhalb der Gas-Dampf-Gemisch-Aufgabe angeordnet werden.

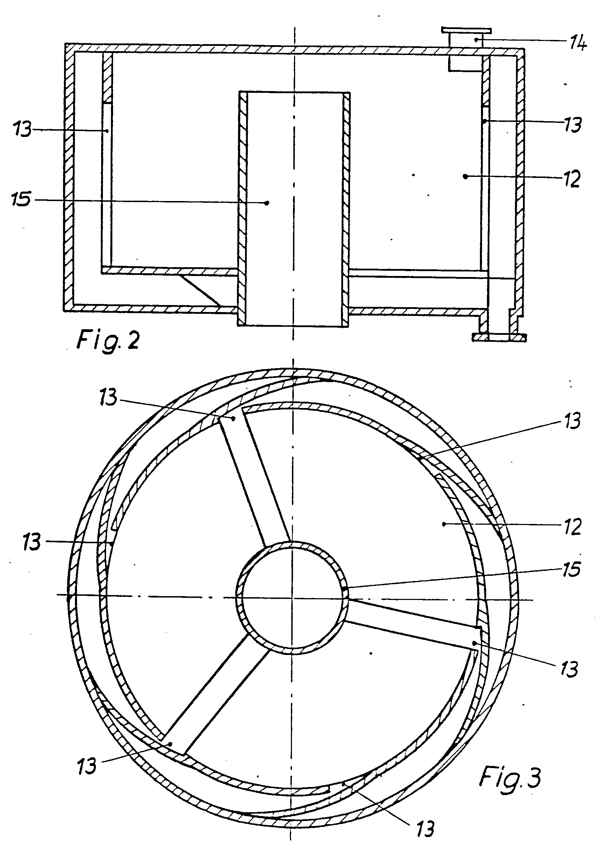

Der in den Figuren 2 und 3 dargestellte Apparat ermöglicht die Realisierung des erfindungsgemäßen Verfahrens kontinuierlich in einem Zentrifugalkraftfeld unter zusätzlicher Nutzung des Erdschwerefeldes. Er besteht aus einem zylindrischen Reaktionsraum 12 mit vertikaler Achse. Durch eine gerade Anzahl, vorzugsweise sechs, von spaltförmigen Öffnungen 13 erfolgt das tangentiale Einblasen des Gas-Dampf-Gemisches in den Reaktionsraum 12. Jede zweite dieser Öffnungen 13 setzt sich im Boden des Apparates fort und bläst Gas-Dampf-Gemisch in der Drehrichtung der Wandspalte um 5 bis 10° nach oben gerichtet in den Reaktionsraum ein. Die Aufgabe 14 des expandierten stärkehaltigen Produktes erfolgt von oben an der äußeren Wand des Reaktionsraumes. Der Austrag des expandierten stärkehaltigen Produktes erfolgt zusammen mit dem Gas-Dampf-Gemisch durch einen im Zentrum des Reaktionsraumes 12 mit vertikaler Achse angeordneten Hohlzylinder 15, der in der Höhe verschiebbar ist.

## Patentansprüche

1. Verfahren zum Aufbringen von Stoffen auf expandierte stärkehaltige Produkte, **gekennzeichnet dadurch**, daß das expandierte stärkehaltige Produkt unmittelbar nach der Expansion einem Reaktionsraum aufgegeben wird, daß es dort dem Erdschwere- oder einem Zentrifugalkraftfeld oder beiden zusammen ausgesetzt wird, daß dabei ein Gas-Dampf-Gemisch mit einer Temperatur zwischen 10°C und 165°C mit einem Winkel zwischen 45° und 120° zur Wirkungsrichtung des Kraftfeldes in den Reaktionsraum einströmt, daß dieses Gas-Dampf-Gemisch eine Einströmgeschwindigkeit hat, die dem Zwei- bis Zehnfachen der Schwebegeschwindigkeit des expandierten stärkehaltigen Produktes entspricht, daß zusammen mit dem Gas-Dampf-Gemisch die auf die Oberfläche des expandierten stärkehaltigen Produktes aufzubringenden Stoffe in den Reaktionsraum eingebracht werden, daß dem Gas-Dampf-Gemisch im Expansionsraum eine Geschwindigkeitskomponente aufgeprägt wird, die der Richtung des Kraftfeldes entgegensteht und kurz vor dem Abzug des Gas-Dampf-Gemisches etwa der halben Schwebegeschwindigkeit des expandierten stärkehaltigen Produktes entspricht.

2. Verfahren zum Aufbringen von Stoffen auf expandierte stärkehaltige Produkte nach Anspruch 1, **gekennzeichnet dadurch**, daß im Erdschwerefeld das Gas-Dampf-Gemisch mit einer Einströmgeschwindigkeit von 17 m/s bis 34 m/s in den Expansionsraum einströmt, die dem Gas-Dampf-Gemisch im Expansionsraum aufgeprägte Geschwindigkeitskomponente, die der Richtung des Kraftfeldes entgegensteht, kurz vor dem Abzug des Gas-Dampf-Gemisches einen Betrag von 0,8 bis 5,0 m/s aufweist und die Verweilzeit des stärkehaltigen Produktes 12 bis 75 Sekunden beträgt.

3. Verfahren zum Aufbringen von Stoffen auf expandierte stärkehaltige Produkte nach Anspruch 1 oder 2, **gekennzeichnet dadurch**, daß zusätzlich zu den mit dem Gas-Dampf-Gemisch eingebrachten Stoffen weitere Stoffe aufgegeben werden, die auf die Oberfläche des expandierten stärkehaltigen Produktes aufgebracht werden.

## Claims

1. A method of applying substances to expanded, starch-containing products, characterised in that the expanded, starch-containing product is delivered to a reaction chamber directly after expansion, in that there it is exposed to the gravitational or a centrifugal force field or to both together, in that in this process a gas-steam mixture at a temperature between 10°C and 165°C flows into the reaction chamber at an angle to the direction of effect of the force field of between 45° and 120°, in that this gas-steam mixture has an admission velocity which corresponds to two to ten times the suspension velocity of the expanded, starch-containing product, in that the substances to be applied to the surface of the expanded, starch-containing product are introduced into the reaction chamber together with the gas-steam mixture, in that a velocity constituent is impressed on the gas-steam mixture in the expansion chamber, which velocity constituent opposes the direction of the force field and shortly before the discharge of the gas-steam mixture corresponds approximately to half the suspension velocity of the expanded, starch-containing product.

2. A method of applying substances to expanded, starch-containing products according to claim 1, characterised in that in the gravitational field, the gas-steam mixture flows into the expansion chamber at an admission velocity of 17 m/s to 34 m/s, the velocity constituent which is impressed on the gas-steam mixture in the expansion chamber and which is opposed to the direction of the force field is 0.8 m/s to 5.0 m/s shortly before the discharge of the gas-steam mixture and the dwell time of the starch-containing product is 12 to 75 seconds.

3. A method of applying substances to expanded, starch-containing products according to claim 1 or 2,

EP 0 344 665 B1

characterised in that additionally to the substances introduced with the gas-steam mixture, further substances are delivered which are applied to the surface of the expanded, starch-containing product.

**Revendications**

1. Procédé pour appliquer des subtances sur des produits expansés à base d'amidon, caractérisé par le fait que le produit expansé à base d'amidon est introduit dans une enceinte de réaction directement après l'expansion, qu'il y est exposé au champ de la gravité ou d'une force centrifuge ou des deux ensemble, un mélange gaz-vapeur étant introduit dans l'enceinte de réaction, à une température située entre 10°C et 165°C, avec un angle entre 45° et 120° par rapport à la direction d'action du champ de force, ce mélange gaz-vapeur présentant une vitesse d'introduction qui est du double au décuple de la vitesse de suspension du produit expansé à base d'amidon, que, conjointement avec le mélange gaz-vapeur, les substances à appliquer sur la surface du produit expansé à base d'amidon sont introduites dans l'enceinte de réaction, qu'est appliquée au mélange gaz-vapeur dans l'enceinte de réaction une composante de vitesse opposée au sens du champ de force et qui correspond, peu avant l'extraction du mélange gaz-vapeur, à peu près à la moitié de la vitesse de suspension du produit expansé à base d'amidon.

2. Procédé pour appliquer des subtances sur des produits expansés à base d'amidon selon la revendication 1, caractérisé en ce que, dans le champ de la gravité, le mélange gaz-vapeur est injecté dans l'enceinte de réaction, avec une vitesse d'injection allant de 17 m/s à 34 m/s, la composante de vitesse appliquée au mélange gaz-vapeur dans l'enceinte d'expansion et opposée au sens du champ de force présentant peu avant l'extraction du mélange gaz-vapeur une valeur de 0,8 à 5,0 m/s et le temps de séjour du produit à base d'amidon étant de 12 à 75 secondes.

3. Procédé pour appliquer des subtances sur des produits expansés à base d'amidon selon la revendication 1 ou 2, caractérisé en ce qu'en plus des substances introduites avec le mélange gaz-vapeur, on applique d'autres substances, appliquées sur la surface du produit expansé à base d'amidon.

5

Fig. 1

Fig. 2

Fig. 3